**Europäisches Patentamt**

**European Patent Office**

**Office européen des brevets**

(11) Numéro de publication: **0 394 098**

**A1**

## (12) DEMANDE DE BREVET EUROPEEN

(21) Numéro de dépôt: **90400987.5**

(51) Int. Cl.5: **G06F 3/06, G11B 33/12**

(22) Date de dépôt: **10.04.90**

(30) Priorité: **14.04.89 FR 8905019**

(43) Date de publication de la demande:
**24.10.90 Bulletin 90/43**

(84) Etats contractants désignés:
**AT BE CH DE DK ES FR GB GR IT LI LU NL SE**

(71) Demandeur: **ALTEC**
**18 avenue des Champs-Elysées**
**F-75008 Paris(FR)**

(72) Inventeur: **Colin, Philippe**
**70 avenue de Rigny**
**F-94360 Bry sur Marne(FR)**

(74) Mandataire: **Grosset-Fournier, Chantal**
**Catherine et al**
**ERNEST GUTMANN-YVES PLASSERAUD S.A.,**
**67 boulevard Haussmann**
**F-75008 Paris(FR)**

(54) **Dispositif pour branchement d'un disque dur amovible.**

(57) Il s'agit d'un dispositif (1) pour branchement d'un disque dur amovible (7) présentant une configuration d'entrée-sortie de type quelconque, avec un ordinateur (2) muni d'une carte électronique contrôleur (6) présentant une configuration d'entrée-sortie d'interface avec un disque dur de type déterminé.

Le dispositif comprend un boîtier (11) contenant le disque dur (7), un coffret lecteur (14), dans lequel le boîtier (11) est insérable de façon amovible, et des moyens de connexion (9) du disque dur avec la carte contrôleur comprenant des moyens d'adaptation (10) internes au boîtier, agencés pour rendre compatible la configuration d'entrée-sortie du disque dur (7) avec la configuration d'entrée-sortie de la carte contrôleur (6).

FIG.2

**EP 0 394 098 A1**

## DISPOSITIF POUR BRANCHEMENT D'UN DISQUE DUR AMOVIBLE

La présente invention concerne un dispositif pour branchement d'un disque dur amovible avec un ordinateur.

Elle trouve une application particulièrement importante bien que non exclusive, dans le domaine du branchement d'un disque dur amovible avec un micro-ordinateur du type PC, APPLE ou SYSTEMES INDUSTRIELS.

On connaît déjà des dispositifs de branchement de disque dur amovible sur micro-ordinateur

L'amovibilité du disque dur présente de nombreux avantages. Elle permet notamment de conserver à part des fichiers primordiaux ou de les transporter d'un ordinateur à l'autre.

Les disques durs amovibles constituent également une solution intéressante de sauvegarde des données, les débits de transfert d'informations qu'ils présentent étant importants, et les temps d'accès étant corrects par rapport aux temps d'accès des disques durs fixes traditionnels.

Enfin, un disque dur amovible présente un autre avantage non négligeable. Il permet d'assurer la confidentialité des données mieux qu'un logiciel crypteur/décrypteur de fichiers. Le disque dur amovible peut, en effet, être mis sous clé.

De façon générale, les dispositifs connus comprennent un coffret lecteur connecté à l'ordinateur, via ou non une carte électronique spécifique au dispositif, et un boîtier amovible contenant le disque dur, insérable dans le coffret lecteur.

Ces dispositifs de l'art antérieur présentent des inconvénients.

Par exemple, ils ne comportent pas de moyens empêchant la connexion du disque dur sous tension, bien qu'une connexion sous tension puisse endommager le disque dur. Mais surtout ils ne permettent pas de connecter à un ordinateur, muni d'une carte contrôleur présentant une configuration d'entrée-sortie d'interface avec un disque dur de type déterminé, un disque dur présentant une configuration d'entrée-sortie de type quelconque.

En d'autres termes, avec les dispositifs connus un seul type de disque dur peut être connecté à un coffret lecteur déterminé correspondant à un ordinateur donné.

Or, il existe actuellement essentiellement quatre types de configuration d'entrée-sortie ou interfaces possibles pour disques durs avec les micro-ordinateurs du marché (PC, APPLE, PS/2).

Ces types d'interfaces différents, qui répondent aux normes constructeurs connues sous les dénominations suivantes : ST 506 à encodage MFM ou à encodage RLL, SCSI et ESDI, limitent donc les possibilités d'utilisation des disques durs amovibles.

La présente invention vise à fournir un dispositif pour branchement d'un disque dur amovible répondant mieux que ceux antérieurement connus aux exigences de la pratique, notamment en ce qu'il autorise l'utilisation et la connexion de disques durs amovibles présentant n'importe quel type d'interfaces, avec un ordinateur présentant une interface déterminée avec disque dur, et ce avec un même coffret lecteur quelque soit le type de disque dur utilisé, et en ce qu'il permet cette connexion en toute sécurité par des moyens simples, peu coûteux et avec un encombrement réduit.

Dans ce but l'invention propose notamment un dispositif de branchement d'un disque dur amovible présentant une configuration d'entrée-sortie de type quelconque, avec un ordinateur muni d'une carte électronique contrôleur présentant une configuration d'entrée-sortie d'interface avec un disque dur de type déterminé, comprenant un boîtier contenant le disque dur, un coffret lecteur dans lequel le boîtier est insérable de façon amovible, et des moyens de connexion du disque dur avec la carte contrôleur comprenant des moyens d'adaptation, internes au boîtier, entre les entrées-sorties du disque dur et les entrées-sorties de la carte contrôleur, agencés pour rendre compatible la configuration d'entrée-sortie du disque dur de type quelconque dont le boîtier est inséré dans le coffret lecteur, avec la configuration d'entrée-sortie de la carte contrôleur de type déterminé.

Dans des modes de réalisation préférés, on a recours en outre à l'une et/ou à l'autre des dispositions suivantes :
- le type de configuration d'entrée-sortie du disque dur répondant à l'une quelconque des normes ST 506 à encodage MFM ou à encodage RLL et ESDI, et le type de configuration déterminée; d'entrée-sortie de la carte contrôleur répondant également à l'une de ces normes, les moyens d'adaptation comprennent un circuit imprimé de connexion propre à permettre indifféremment la connexion du disque dur de type quelconque avec la carte contrôleur de type déterminé;
- les moyens de connexion du disque dur avec la carte contrôleur comprennent une série de câbles munie à une de ses extrémités d'un premier connecteur multiple de raccordement avec la carte contrôleur, via ou non une carte électronique intermédiaire d'interface fil à fil avec l'ordinateur, et à l'autre de ses extrémités d'un deuxième connecteur multiple fixé au coffret lecteur, les moyens d'adaptation entre les entrées-sorties du disque dur et les entrées-sorties de la carte contrôleur étant raccordés d'un côté au disque dur et comprenant de l'autre côté un troisième connecteur multiple, fixé au boîtier, à enfichage rapide dans le deuxième connecteur multiple fixé au coffret lecteur, et destiné à assurer la connexion du disque dur avec la carte contrôleur lorsque le boîtier est inséré dans le coffret lecteur;

- la série de câbles comporte deux tronçons, un premier tronçon raccordé d'un côté au premier connecteur multiple et de l'autre côté à un quatrième connecteur multiple mobile, et un deuxième tronçon raccordé d'un côté à un cinquième connecteur multiple fixé au coffret lecteur et destiné au raccordement avec le quatrième connecteur multiple mobile, et de l'autre côté un deuxième connecteur multiple;

- les connecteurs multiples sont des connecteurs 50 points ou broches;

- le dispositif comprend de plus des moyens automatiques de détection du type de configuration d'entrée-sortie du disque dur contenu dans le boîtier inséré dans le coffret lecteur, et des moyens de signalisation en cas d'incompatibilité entre la configuration des entrées-sorties du disque dur et la configuration des entrées-sorties de la carte contrôleur;

- les moyens automatiques de détection comprennent des moyens de lecture et de comparaison avec une table de vérité prédéterminée, de signaux logiques précodés correspondant au type de configuration du disque dur dont le boîtier est inséré dans le coffret lecteur;

- le dispositif comprend de plus des moyens de verrouillage du boîtier dans le coffret en position connectée du boîtier avec le coffret lecteur, lesdits moyens de verrouillage du boîtier comprenant des moyens de mise sous tension du disque dur lors du verrouillage ou de coupure de la tension d'alimentation du disque dur lors du déverrouillage;

- les moyens de verrouillage comprennent avantageusement un commutateur à clé, une came actionnée par le commutateur et un loquet solidaire de la came, le loquet étant propre à effectuer un mouvement de rotation entre une position escamotée de déverrouillage et une position de verrouillage du boîtier, qui a été préalablement inséré dans le coffret lecteur, position pour laquelle le loquet pénètre dans une fente latérale du boîtier;

- les moyens de mises sous et hors tension de l'alimentation du disque dur comprennent une tringle actionnée par le commutateur et commandant un interrupteur électrique.

- le boitier du disque dur comporte des trémies de ventilation en partie avant.

L'invention sera mieux comprise à la lecture de la description qui suit de modes particuliers de réalisation, donnés à titre d'exemple non limitatif.

La description se réfère aux dessins qui l'accompagnent dans lesquels :

- La figure 1 est un schéma synoptique de principe d'un dispositif selon un mode de réalisation de l'invention, raccordé à un ordinateur.

- La figure 2 est une vue en perspective et partiellement en transparence d'un mode particulier de réalisation du dispositif de l'invention, raccordé à un ordinateur.

- La figure 3 est une vue latérale en coupe partielle du coffret lecteur du dispositif représenté sur la figure 2.

- Les figures 4 et 5 sont respectivement une vue de face avant et une vue de face arrière du coffret lecteur de la figure 2.

- La figure 6 est une vue en perspective du boitier amovible contenant un disque dur, du dispositif de la figure 2.

- La figure 7 est une vue de face arrière du boitier de la figure 6.

- La figure 8 est une vue schématique de dessus du contenu du boitier de la figure 6.

- La figure 9 représente schématiquement un mode de réalisation des moyens d'adaptation de l'invention, entre les entrées-sorties d'un disque dur ST506 à encodage MFM, ST506 à encodage RLL ou ESDI avec une carte contrôleur de configuration déterminée, répondant également à l'une desdites normes ST 506 à encodage MFM, ST 506 à encodage RLL et ESDI.

- La figure 10 représente schématiquement un second mode de réalisation des moyens d'adaptation de l'invention entre les entrées-sorties d'un disque dur répondant à la norme SCSI, avec une carte contrôleur d'interface répondant aux normes ST 506 ou ESDI,

- La figure 11 représente schématiquement les moyens automatiques de détection du type de configuration d'entrées-sorties du disque dur selon un mode de réalisation particulier de l'invention.

Dans les figures, les mêmes références désignent les mêmes pièces ou éléments.

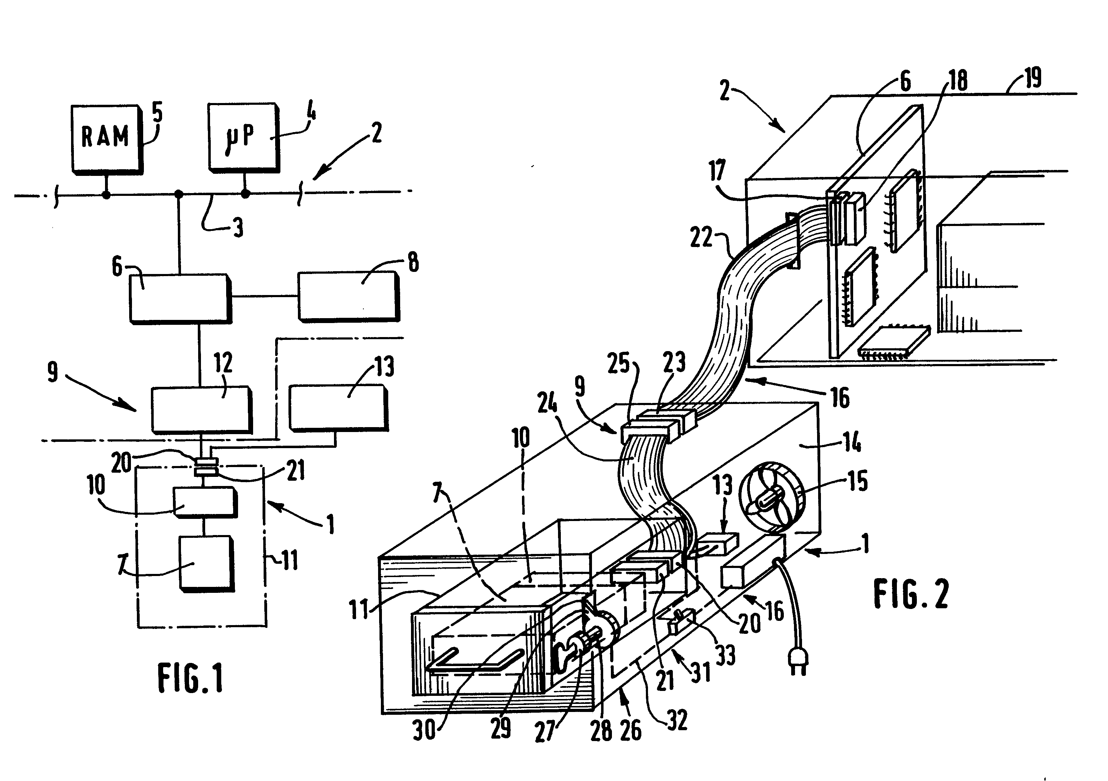

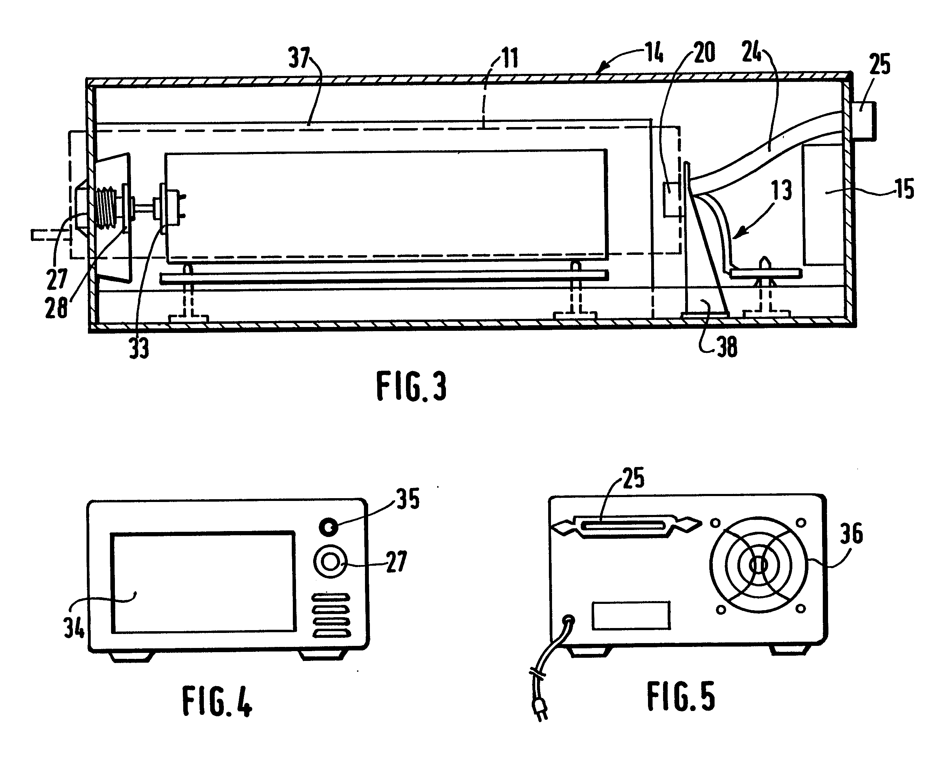

Sur la figure 1, on a représenté un schéma de principe du dispositif 1 raccordé à un ordinateur 2. L'ordinateur 2 comprend notamment de façon connue en soi, un bus 3 de données, d'adresse et de commande, un microprocesseur 4, une mémoire vive de travail 5, divers périphériques et mémoires mortes (non représentés) et une carte électronique contrôleur 6 du fonctionnement d'au moins un disque dur, en

3

l'occurrence le disque dur amovible 7, ladite carte contrôleur présentant une configuration d'entrée-sortie d'interface avec le disque dur, de type déterminé.

Il existe actuellement sur les microordinateurs quatre types d'interface différents qui répondent à l'une des normes suivantes : ST 506 à encodage RLL ou à encodage MFM, ESDI et SCSI.

La carte contrôleur peut également "contrôler" le fonctionnement d'un second disque dur 8, par exemple fixé au boîtier de l'ordinateur.

Le dispositif 1 comprend des moyens 9 de connexion du disque dur amovible 7 avec la carte contrôleur. Le disque dur 7 présente de son côté, une configuration d'entrée-sortie de type quelconque, c'est-à-dire répondant à l'une quelconque des normes ci-dessus mentionnées, qui peut donc être différente de celle des entrées-sorties de la carte contrôleur 6.

Selon l'invention les moyens de connexion 9 comportent des moyens 10 d'adaptation entre les entrées-sorties du disque dur 7 et les entrées-sorties de la carte contrôleur 6, agencés pour rendre compatible la configuration d'entrée-sortie du disque dur avec la configuration d'entrée-sortie de la carte contrôleur. Des exemples de réalisation de tels moyens d'adaptation sont donnés par la suite.

Le disque dur 7 et les moyens d'adaptation 10 sont internes à un boîtier 11, amovible, représenté en trait mixte sur la figure 1 et qui vient se connecter à la carte contrôleur 6, par exemple par l'intermédiaire d'une carte électronique intermédiaire 12 d'interface fil à fil avec l'ordinateur et qui ne sert que pour réaliser une connectique "propre" avec l'ordinateur. Il est bien entendu également possible de se raccorder directement sur la carte contrôleur comme montré sur la figure 2.

Dans un mode avantageux de réalisation le dispositif comprend de plus des moyens 13 automatiques de détection du type de configuration d'entrées-sorties du disque dur 7 qui seront détaillés ci-après.

La figure 2 montre un mode de réalisation particulier du dispositif 1 de l'invention qui comprend le boitier 11, par exemple en métal ou en plastique dur du type PVC, contenant le disque dur 7 ainsi que les moyens d'adaptation 10, représentés l'un et l'autre schématiquement en traits interrompus sur la figure 2.

Le boîtier 11 est insérable dans un coffret lecteur 14, par exemple de forme sensiblement parallélépipédique, en métal ou en tout autre matériau rigide adéquat. Le coffret lecteur 14 comporte notamment un ventilateur 15 de refroidissement du disque dur, et des moyens 16 de branchement électrique permettant avantageusement l'alimentation électrique autonome en 220 V du coffret lecteur 14.

Les moyens 9 de connexion du disque 7 avec la carte électronique contrôleur 6 comprennent une série 16 de câbles parallèles en nappe munie à une de ses extrémités d'un premier connecteur multiple 17 de raccordement avec un connecteur 18 serti dans la carte contrôleur (figure 2). La connexion peut également se faire via une carte d'interface fil à fil, comme indiqué précédemment, (non représentée sur la figure 2) si l'on veut "sortir" la connexion du boîtier 19 de l'ordinateur.

Ce type de carte d'interface fil à fil existe d'ailleurs systématiquement sur les microordinateurs de la marque APPLE pour lesquels il n'est donc pas nécessaire de démonter le boîtier du micro-ordinateur pour réaliser le branchement.

La série 16 de câbles est munie à l'autre de ses extrémités d'un deuxième connecteur multiple 20 fixé au coffret lecteur 14. Les moyens d'adaptation 10 sont raccordés quant à eux d'un côté au disque dur 7 et de l'autre à un troisième connecteur multiple 21 fixé au boîtier 11, à enfichage rapide dans le deuxième connecteur multiple 20 fixé au coffret lecteur et destiné à assurer la connexion du disque dur avec la carte contrôleur lorsque le boîtier 11 est inséré dans le coffret lecteur 14.

Afin de rendre également le coffret lecteur 14 lui-même amovible par rapport à l'ordinateur, la série 16 de câbles comportent avantageusement deux tronçons, un premier tronçon 22 raccordé d'un côté au premier connecteur multiple 17 et de l'autre côté à un quatrième connecteur multiple 23 mobile, et un deuxième tronçon 24 raccordé d'un côté à un cinquième connecteur multiple 25 fixé au coffret lecteur 14 et destiné au raccordement avec le quatrième connecteur multiple 23, et de l'autre côté au deuxième connecteur multiple 20.

Enfin, sur la figure 2 on a également représenté schématiquement les moyens 13 automatiques de détection internes au coffret lecteur 14, et des moyens 26 de verrouillage du boîtier 11 avec le coffret lecteur 14.

Les moyens de verrouillage 26 comprennent dans le mode de réalisation de l'invention plus particulièrement décrit ici, un commutateur à clé 27, une came 28 actionnée par le commutateur et un loquet 29 solidaire de la came en rotation. Le loquet 29 est propre à effectuer un mouvement de rotation entre une position escamotée de déverrouillage et une position de verrouillage où il pénètre dans une fente latérale 30 du boîtier 11.

Les moyens de verrouillage 26 du boîtier 11 comprennent de plus des moyens 31 de mise sous tension électrique du disque dur lors du verrouillage ou de coupure de la tension lors du déverrouillage comportant un système 32 à tringlerie, (en traits interrompus sur la figure 2) purement mécanique, actionné par le commutateur à clé 27 et commandant un interrupteur électrique 33.

Le coffret lecteur 14 va maintenant être plus précisément décrit en se référant aux figures 3, 4 et 5.

Le coffret lecteur 14 comprend sur la face avant (figure 4) une porte amovible 34, le commutateur à clé 27, un ou deux voyants 35 de signalisation, par exemple constitués par des diodes électroluminescentes (LED), et une grille pour l'aération et la ventilation du disque dur destiné à être inséré dans le coffret lecteur.

La face arrière du coffret lecteur (figure 5) comprend essentiellement le "cinquième" connecteur multiple 25 fixé au coffret, par exemple constitué par un connecteur femelle 50 points du type connu sous la marque CENTRONICS et une grille 36 de protection pour le ventilateur 15.

A l'intérieur du coffret lecteur, schématiquement représenté en coupe sur la figure 3, on retrouve la came 28 commandant le loquet 29 et actionnée par le commutateur à clé 27. On retrouve également l'interrupteur 33 et le ventilateur 15. Le boîtier 11 (représenté en traits interrompus sur la figure 3), est maintenu et guidé par des moyens de guidage 37 de type connu en soi, pour venir se connecter sur le "deuxième" connecteur multiple 20 fixé sur un porte connecteur 38 solidaire de l'enveloppe du coffret 14. Le deuxième connecteur multiple 20 est par exemple également constitué par un connecteur femelle 50 points du type CENTRONICS.

Les moyens de détection 13, par exemple alimentés électriquement en 5 V par le bloc transformateur d'alimentation de l'ordinateur via les moyens de connexion 16, sera décrit plus précisément par la suite.

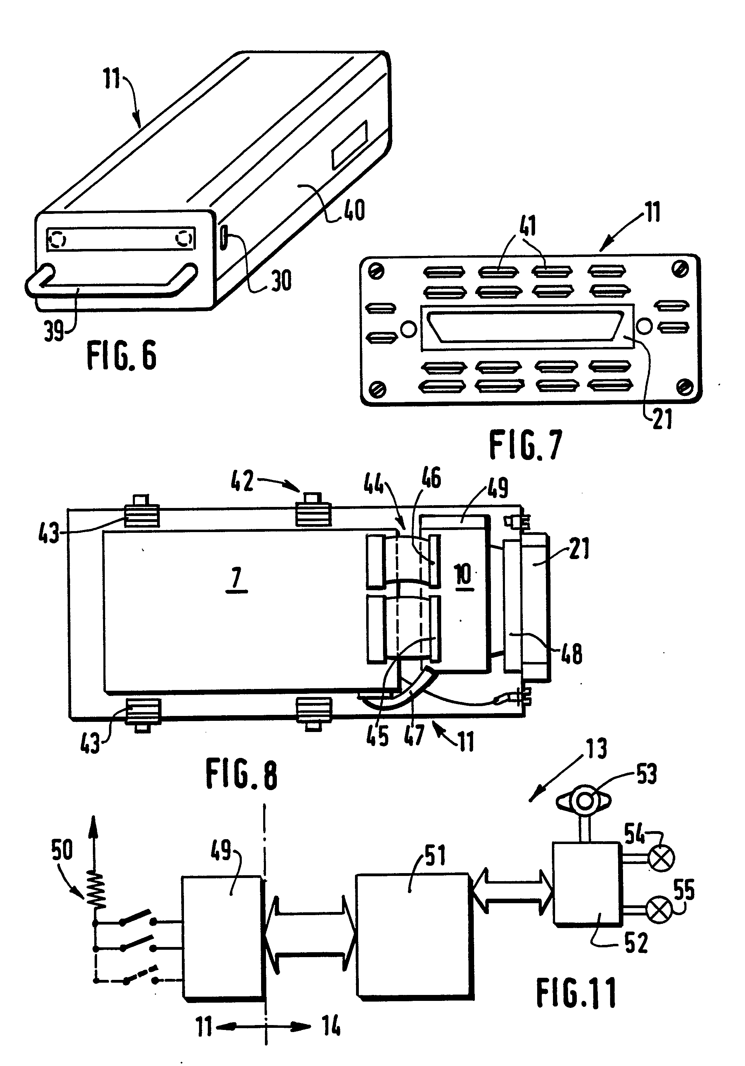

La figure 6 montre le boîtier 11 contenant le disque dur 7 et les moyens 10 d'adaptation entre disque dur et carte contrôleur. Le boîtier 11 se présente sous forme d'une "cartouche" amovible munie d'une poignée de préhension 39, une fente 30 étant ménagée dans la paroi latérale 40 du boîtier pour permettre le verrouillage ou blocage de ce dernier dans le coffret lecteur.

Des trémies avant de ventilation (non représentées sur la figure) sont prévues en partie avant du boitier de la cartouche amovible. Elles sont par exemple situées sur la paroi inférieure du boitier, à proximité immédiate de la face avant de ce dernier, munie de la poignée 39. Cette partie avant de boitier dépasse du coffret-lecteur lorsque la cartouche est enfoncée et verrouillée dans ledit coffret-lecteur. Autrement dit, le boitier de la cartouche de disque dur amovible présente une dimension longitudinale plus importante que l'enceinte ou évidement du coffret-lecteur dans lequel il vient s'insérer. De ce fait, le boitier présente une partie avant en saillie par rapport au coffret-lecteur lorsque la cartouche est enfoncée et verrouillée dans l'évidement de ce coffret. Les trémies de ventilation avant se situent sur cette partie en saillie, par exemple sur la paroi interne du boitier, comme indiqué ci-avant.

L'air froid rentre par ces trémies et refroidit le disque dur situé à l'intérieur de la cartouche. L'air qui s'est réchauffé au contact du disque est ensuite aspiré par les trémies arrières 41 situées dans la partie de la paroi arrière comme représenté sur la figure 7, grâce au ventilateur lui-même situé à l'arrière du coffret-lecteur. L'air chaud est ainsi évacué vers l'extérieur. Une telle disposition est particulièrement avantageuse et permet le refroidissement de disques durs de grande capacité dont l'échauffement pourrait autrement être nocif au bon fonctionnement du dispositif.

La figure 7 est une vue de face arrière du boîtier 11 qui comprend le troisième connecteur multiple 21 fixé au boîtier 11, à enfichage rapide dans le deuxième connecteur multiple 20 fixé au coffret lecteur. Dans le mode de réalisation plus précisemment décrit ici le connecteur 21 sera donc un connecteur 50 points mâle CENTRONICS. Des trémies d'aérations 41 sont prévues pour le refroidissement du disque dur interne au boîtier 11.

La figure 8 est une vue schématique de l'intérieur du boîtier 11. Le disque dur 7 est fixé par un système 42 de fixation, par exemple en 4 points et comporte quatre dispositifs amortisseurs connus en soi, par exemple constitués par des cylindres blocs 43. Les moyens d'adaptation 10 permettent quant à eux, d'adapter les entrées-sorties (44) du disque dur 7, qui se présentent physiquement,soit (exemple représenté sur la figure 8) sous la forme d'un connecteur 34 points 45, d'un connecteur 20 points 46 et d'un câble 47 pour l'alimentation électrique, [interfaces ST 506 (MFM/RLL) et ESDI], soit (exemple non représenté) sous la forme d'un circuit imprimé avec connecteur 50 points (Interface SCSI), avec les entrées-sorties de la carte contrôleur qui se présentent physiquement sous forme d'un connecteur 50 points, 48. La série 16 de câbles appartenant aux moyens de connexions externes au boîtier, est quant à elle, spécifique de la carte contrôleur dont elle permet en fait simplement le prolongement fil à fil en parallèle, des entrées-sorties de ladite carte contrôleur 6 jusqu'au connecteur 21.

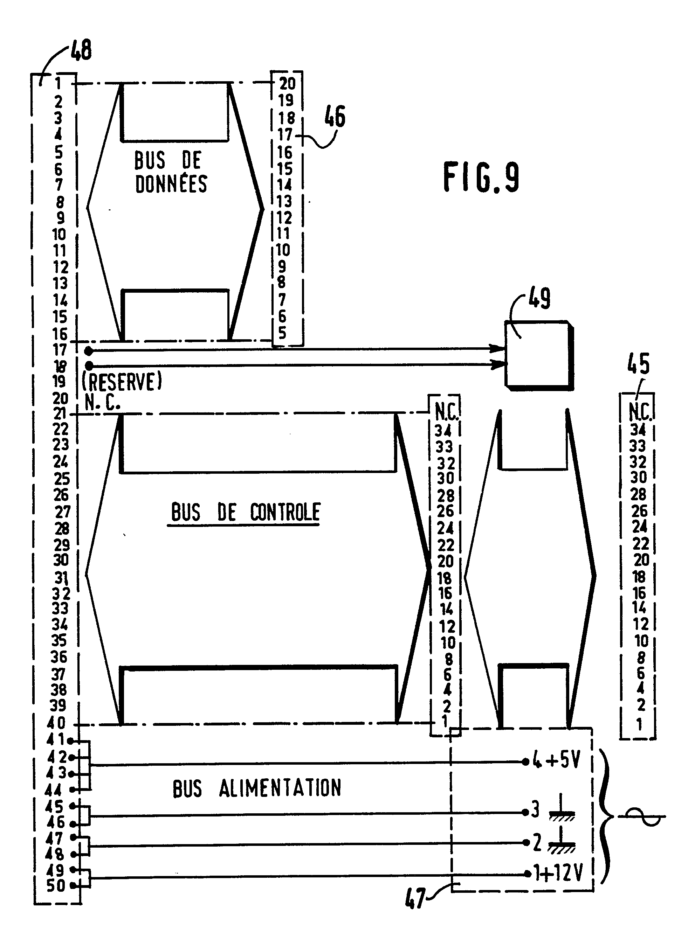

Sur la figure 9, on a représenté schématiquement un exemple de moyens d'adaptation utilisés dans un mode de réalisation de l'invention, permettant d'adapter indifféremment des disques durs présentant une configuration d'entrée-sortie répondant aux normes ST 506 à encodage RLL ou à encodage MFM et ESDI, avec une carte contrôleur présentant une configuration d'entrée-sortie déterminée répondant à l'une ou à l'autre de ces mêmes configurations.

De façon surprenante et grâce à un agencement particulier de la répartition entre entrée-sortie selon ces différentes normes, les moyens d'adaptation peuvent être, dans ce cas, constitués par un même circuit imprimé dont une représentation schématique est faite figure 9.

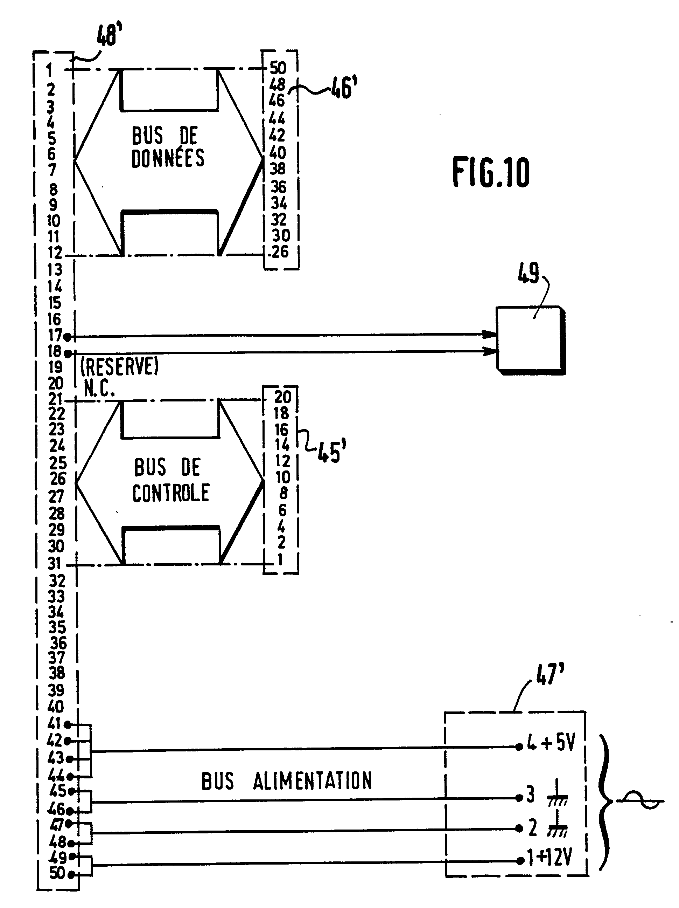

La figure 10 montre un mode de réalisation des moyens d'adaptation de l'invention permettant d'adapter un disque dur présentant une configuration d'entrée-sortie répondant à la norme SCSI avec une carte contrôleur présentant une configuration d'entrée-sortie répondant à l'une ou à l'autre des normes ST 506 à encodage RLL ou MFM et ESDI.

Sur les figures 9 et 10, les rectangles en traits interrompus figurent les connecteurs d'interface des moyens d'adaptation avec d'un côté le disque dur (il s'agit des connecteurs 46, 45 pour la figure 9 et 46´, 45´ pour la figure 10), et l'alimentation électrique (connecteur 47 pour la figure 9 et connecteur 47´ pour la figure 10) qui provient soit directement du micro-ordinateur soit d'un transformateur propre au coffret lecteur, et avec de l'autre côté la carte contrôleur (connecteurs 48, 48´) via la série 16 de câbles.

Les numéros figurant dans les rectangles en traits interrompus indiquent "les adresses" des points ou broches des connecteurs qui sont mis en rapport les uns avec les autres.

Deux broches raccordées au circuit 49 explicité ci-après (voir figure 11) sont réservées pour les moyens automatiques 13 de détection du type de configuration d'entrée-sortie du disque dur 7 contenu dans le boîtier 11, et de signalisation en cas d'incompatibilité entre disque dur 7 et carte contrôleur 6.

Ces moyens 13 comprennent un circuit imprimé agencé d'une part pour réaliser la détection automatique du type de configuration d'entrée-sortie du disque dur dont le boitier est inséré dans le coffret lecteur, et d'autre part pour signaler les incompatibilités de configurations entre le disque dur et la carte contrôleur (via le deuxième connecteur 20 du coffret lecteur).

Un tel circuit imprimé ne permet pas, dans le mode de réalisation de l'invention plus particulièrement décrit ici, la transformation des interfaces entre disque dur et carte contrôleur en cas d'incompatibilité. Une telle disposition n'est cependant aucunement exclue de l'invention.

Les moyens 13 permettent d'éviter de tenter de faire fonctionner un disque dont les entrées-sorties ont été par exemple configurées en SCSI par les moyens d'adaptation 10, avec une carte contrôleur et un coffret lecteur correspondant dont les entrées-sorties sont configurées par exemple en ST 506.

De façon plus précise (voir figure 11), les moyens 13 comprennent un circuit 49, interne au boîtier 11, de pré-codage alimenté en tension par des moyens 50 de codage par exemple du type connu sous la dénomination "DIL SWITCH".

Ce précodage est réalisé à l'aide du positionnement de 2 broches parmi les 50 broches ou "points" de sortie du connecteur 48, au niveau logique O et/ou 1.

La table de vérité en est, par exemple, la suivante :

| Broche 37 | Broche 38 | disque correspondant |
|-----------|-----------|----------------------|
| 0 | 0 | ST 506/ MFM |
| 0 | 1 | ST 506/ RLL |
| 1 | 0 | SCSI |
| 1 | 1 | ESDI |

Le précodage est comparé en permanence par un comparateur logique 51 fixé au coffret lecteur avec le type d'interface utilisé au niveau de l'ordinateur et préalablement codé au niveau du coffret lecteur qui lui est spécifiquement affecté.

Le comparateur 51 attaque le circuit 52, connu en lui-même, de commande d'une alarme sonore 53 et de signalisation par exemple par clignotement d'une diode LED 54 rouge en cas d'incompatibilité.

Dans le cas contraire, si les interfaces sont compatibles, la diode LED 55 verte, s'allume.

Le fonctionnement du dispositif selon le mode de réalisation de l'invention plus particulièrement présenté ici, va maintenant être décrit.

L'utilisateur doit tout d'abord, soit connecter la carte interface fil à fil 12 dans l'ordinateur (type PC et compatibles), soit relier directement, la série 16 de câbles provenant du coffret lecteur à l'ordinateur (type APPLE).

Pour les ordinateurs PC, il est nécessaire d'utiliser le logiciel d'origine (SET UP) afin de redéfinir la configuration d'utilisation de l'ordinateur (utilisation en premier ou deuxième du disque dur amovible).

L'utilisateur branche ensuite le coffret lecteur 14 sur la série 16 de câbles en connectant ensemble les connecteurs 23 et 25, et raccorde l'alimentation 16 du coffret lecteur au secteur.

L'ordinateur et le coffret lecteur qui lui est associé, sont alors disponibles pour brancher un disque dur amovible de type quelconque.

L'utilisateur ne peut, par ailleurs, insérer le boîtier 11 dans le coffret lecteur qu'après avoir déverrouillé les moyens de blocage ou verrouillage 27, ce qui fait pivoter le loquet 29, qui empêcherait autrement l'introduction du boîtier dans le coffret, et ce qui coupe par ailleurs l'alimentation du coffret lecteur en actionnant l'interrupteur 33.

Il y a donc impossibilité "mécanique" de connecter le disque dur sous tension, ce qui pourrait l'endommager.

Une fois le coffret déverrouillé par le détenteur de la clé, le boîtier est inséré. La porte 34 s'escamote en pivotant, de façon connue en soi, et le boîtier est guidé par les moyens de guidage 37 jusqu'à connexion entre eux des connecteurs multiples à enfichage rapide 20 et 21. Une légère résistance mécanique prouve que le disque amovible est bien connecté.

En tournant la clé du commutateur 27, l'utilisateur vient ensuite verrouiller en position le boîtier dans le coffret lecteur par insertion du loquet 29 dans la fente 30 du boîtier.

Simultanément la tringle 32 actionne mécaniquement l'interrupteur 33 qui commande la commutation des tensions du disque, l'alimentation du ventilateur et du voyant 35, et le fonctionnement des moyens 13 de détection et de signalisation de la compatibilité entre disque dur et carte contrôleur.

Après 10 secondes, le disque a atteint sa vitesse de rotation normale et peut être exploité.

Le disque dur amovible se comporte en fait exactement comme un disque dur fixe.

Pour extraire le boîtier amovible et son disque dur, le commutateur 27 est ramené dans sa position initiale grâce à la clé, ce qui déverrouille mécaniquement le disque et coupe en même temps les tensions et l'alimentation du ventilateur. Le disque peut alors être extrait.

Le dispositif qui vient d'être décrit permet de manipuler le disque amovible (son boîtier) sans se préoccuper de couper ou non l'alimentation de l'ordinateur. De même, une fois initialisé, il est possible de couper l'alimentation du coffret lecteur sans perturber le fonctionnement de l'ordinateur.

Grâce au dispositif selon l'invention, il est possible de connecter simplement sur un même coffret lecteur associé à un ordinateur, n'importe quel type de disque dur, pouvant présenter des capacités allant par exemple de 20 à 200 M octets, en toute sécurité grâce à une clé individuelle et des moyens automatiques de détection de l'interface du disque permettant une signalisation immédiate d'une erreur dans les compatibilités de configuration.

Comme il va de soi, et comme il résulte de ce qui précède, la présente invention ne se limite nullement aux modes de réalisation plus particulièrement envisagés.

**Revendications**

1. Dispositif (1) pour branchement d'un disque dur (7) amovible présentant une configuration d'entrée-sortie de type quelconque, avec un ordinateur (2) muni d'une carte électronique contrôleur (6) présentant une configuration d'entrée-sortie d'interface avec un disque dur de type déterminé, comprenant un boîtier (11) contenant le disque dur (7), un coffret lecteur (14) dans lequel le boîtier (11) est insérable de façon amovible, et des moyens (9) de connexion du disque dur avec la carte contrôleur, comprenant des moyens (10) d'adaptation, internes au boîtier, entre les entrées-sorties du disque dur et les entrées-sorties de la carte contrôleur, agencés pour rendre compatible la configuration d'entrée-sortie du disque dur (7) de type quelconque dont le boîtier est inséré dans le coffret lecteur, avec la configuration d'entrée-sortie de la carte contrôleur (6) de type déterminé.

2. Dispositif selon la revendication 1, caractérisé en ce que le type de configuration d'entrée-sortie du disque dur (7) répondant à l'une quelconque des normes ST 506 à encodage MFM, ST 506 à encodage RLL et ESDI, et le type de configuration déterminée d'entrée-sortie de la carte contrôleur (6) répondant également à l'une de ces normes, les moyens d'adaptation (10) comprennent un circuit imprimé de connexion propre à permettre indifféremment la connexion du disque dur de type quelconque avec la carte contrôleur de type déterminé.

3. Dispositif selon l'une quelconque des revendications 1 et 2, caractérisé en ce que les moyens (9) de connexion du disque dur avec la carte contrôleur comprennent une série (16) de câbles munie à une de ses extrémités d'un premier connecteur multiple (17) de raccordement avec la carte contrôleur et à l'autre de ses extrémités d'un deuxième connecteur multiple (20) fixé au coffret lecteur (14), les moyens (10) d'adaptation entre les entrées-sorties du disque dur et les entrées-sorties de la carte contrôleur étant raccordées d'un côté audit disque dur et comprenant de l'autre côté un troisième connecteur multiple (21), fixé au boîtier (11), à enfichage rapide dans ledit deuxième connecteur multiple (20), destiné à assurer la connexion du disque dur avec la carte contrôleur, lorsque le boîtier (11) est inséré dans le coffret lecteur (14).

4. Dispositif selon la revendication 3, caractérisé en ce que la série (16) de câbles comporte deux tronçons, un premier tronçon (22) raccordé d'un côté au premier connecteur multiple (17) et de l'autre côté à un quatrième connecteur multiple (23) mobile, et un deuxième tronçon (24) raccordé d'un côté à un cinquième connecteur multiple (25) fixé au coffret lecteur (14), de raccordement avec ledit quatrième connecteur multiple (23) mobile, et de l'autre côté au deuxième connecteur multiple (20).

5. Dispositif selon l'une quelconque des revendications 3 et 4, caractérisé en ce que lesdits connecteurs multiples (17, 20, 21, 23, 25)sont des connecteurs 50 points.

6. Dispositif selon l'une quelconque des revendications précédentes, caractérisé en ce que il comprend de plus des moyens (13) automatiques de détection du type de configuration d'entrée-sortie du disque dur contenu dans le boîtier (11) inséré dans le coffret lecteur (14), et des moyens de signalisation (52, 53, 54, 55) en cas d'incompatibilité entre la configuration des entrées-sorties du disque dur et la configuration des entrées-sorties de la carte contrôleur.

7. Dispositif selon la revendication 6, caractérisé en ce que les moyens (13) de détection comprennent des moyens (51) de lecture et de comparaison avec une table de vérité prédéterminée, de signaux logiques précodés correspondant au type de configuration du disque dur dont le boîtier est inséré dans le coffret lecteur.

8. Dispositif selon l'une quelconque des revendications précédentes, caractérisé en ce qu'il comporte des moyens (26) de verrouillage du boîtier (11) dans le coffret lecteur (14) en position connectée du boîtier avec le coffret lecteur.

9. Dispositif selon la revendication 8, caractérisé en ce que lesdits moyens (26) de verrouillage du boîtier comprennent des moyens (31) de mise sous tension électrique du disque dur lors du verrouillage ou de coupure de la tension d'alimentation du disque dur lors du déverrouillage.

10. Dispositif selon l'une quelconque des revendications 8 et 9, caractérisé en ce que les moyens (26) de verrouillage comprennent un commutateur à clé (27), une came (28) actionnée par le commutateur et un loquet (29) solidaire de la came, propre à effectuer un mouvement de rotation entre une position escamotée de déverrouillage et une position de verrouillage du boîtier qui est inséré dans le coffret lecteur, position pour laquelle le loquet pénètre dans une fente (30) latérale du boîtier.

11. Dispositif selon la revendication 10, caractérisé en ce que les moyens (31) de mise sous et hors tension de l'alimentation du disque dur comprennent une tringle (32) actionnée par le commutateur (27) commandant un interrupteur électrique (33).

12. Dispositif selon l'une quelconque des revendications précédentes caractérisé en ce que le boitier (11) contenant le disque dur comporte des trémies de ventilation en partie avant.

RAM 5   μP 4

2

3

6   8

9   12   13

20   21

10   1

7   11

**FIG.1**

2   6   18   19

17

22

25   23

24   9

16

10   14

7   13   15

11   1

20   16

30   29   27   28   26   32   21   31   33

**FIG.2**

EP 0 394 098 A1

FIG.3

FIG.4

FIG.5

EP 0 394 098 A1

FIG.6

FIG.7

FIG.8

FIG.11

FIG.9

BUS DE DONNÉES

BUS DE CONTROLE

BUS ALIMENTATION

(RESERVE)
N.C.

N.C.

4 +5V

3

2

1+12V

FIG.10

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | WO-A-8 806 780 (TANDON)<br>* Page 6, ligne 5 - page 9, ligne 10; page 12, ligne 30 - page 13, ligne 24; figures 1,4,11 * | 1-4,8-9 | G 06 F 3/06<br>G 11 B 33/12 |
| A | --- | 10,11 | |
| Y | EDN, vol. 32, no. 4, 19 février 1987, pages 69-76, Newton, MA, US; M. WRIGTH: "Bridged SCSI controllers remain viable regardless of emerging embedded controllers"<br>* Page 69, colonne de gauche, lignes 18-30; page 74, colonne de gauche, ligne 35 - colonne du milieu, ligne 7 *<br>--- | 1-4,8-9 | |
| A | ELECTRONIC DESIGN, vol. 35, no. 16, 9 juillet 1987, pages 107-111, Hasbrouck Heights, New Jersey, US; A. FONG et al.: "Build a high-performance SCSI bridge controller"<br>* Page 107, colonne de droite, ligne 25 - page 108, colonne de gauche, ligne 2; page 108, colonne de droite, lignes 6-15 *<br>--- | 1,2,6 | |
| A | GB-A-2 153 130 (NORAND CORP.)<br>* Figures 1,2,8,9; page 1, ligne 5 - page 2, ligne 94 *<br>--- | 1,3,8,9 | |
| A | FR-A-2 594 997 (GUILLEMAIN)<br>* En entier *<br>--- | 1,3,8,9 | |
| A | GB-A-2 188 761 (MITSUBISHI)<br>* Résumé *<br>----- | 6,7 | |

DOMAINES TECHNIQUES RECHERCHES (Int. Cl.5)

G 06 F 3/06
G 11 B 33/12
G 11 B 33/02
G 06 F 1/16

Le présent rapport a été établi pour toutes les revendications

| Lieu de la recherche | Date d'achèvement de la recherche | Examinateur |
|---|---|---|
| LA HAYE | 25-07-1990 | MOENS R.A.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)